Europäisches Patentamt

European Patent Office

Office européen des brevets

(11) Veröffentlichungsnummer: **0 130 344**
**A1**

## (12) EUROPÄISCHE PATENTANMELDUNG

(21) Anmeldenummer: 84105819.1

(22) Anmeldetag: 22.05.84

(51) Int. Cl.⁴: **H 02 K 7/112**

(30) Priorität: 01.06.83 DE 8316122 U

(43) Veröffentlichungstag der Anmeldung: 09.01.85
Patentblatt 85/2

(84) Benannte Vertragsstaaten: **BE DE FR GB IT**

(71) Anmelder: **Quick-Rotan Elektromotoren GmbH,
Gräfenhäuser Strasse 85, D-6100 Darmstadt (DE)**

(72) Erfinder: **Edl, Josef, Daniel-Müller-Strasse 41,
D-6103 Griesheim (DE)**

(74) Vertreter: **Schwan, Gerhard, Dipl.-Ing., Elfenstrasse 32,
D-8000 München 83 (DE)**

(54) **Kupplungsmotor.**

(57) Kupplungsmotor mit elektromagnetisch betätigter Reibungskupplung und -bremse zum Übertragen von Drehmoment auf eine Abtriebswelle (20) mit Nabe (4), die über axial auslenkbare Federringe (5, 6) mit durch Magnetkraft axial verstellbaren Kupplungs- und Bremsscheiben (7, 8) drehfest verbunden sind, die gegen eine auf der Motorwelle sitzende Antriebsscheibe (10) bzw. ein Bremswiderlager (2) anpreßbar sind. Die Nabe (4) ist einteilig ausgebildet und weist einen axial zwischen Kupplungs- und Bremsscheibe liegenden Tragring (31) auf. Die Federringe sind an von der Nabenachse in annähernd gleichem Radialabstand liegenden, in Drehrichtung gegeneinander versetzten Stellen mit dem Tragring und der Kupplungsscheibe bzw. der Bremsscheibe verbunden sowie mit einer Ruhevorspannung versehen. Zum Einstellen des Bremsspiels und/oder des Kupplungsspiels ist die Abtriebswelle in axialer Richtung verstellbar.

EP 0 130 344 A1

1

Quick-Rotan

Elektromotoren GmbH

Gräfenhäuser Str. 85

6100 Darmstadt

Kupplungsmotor

Die Erfindung betrifft einen Kupplungsmotor mit elektromagnetisch betätigter Reibungskupplung und -bremse zum
Übertragen von Antriebs- und/oder Bremsdrehmoment auf eine Abtriebswelle, auf der eine Nabe dreh- und verschiebefest angebracht ist, die über je einen axial auslenkbaren
Federring mit einer durch Magnetkraft axial verstellbaren,
ringförmigen Kupplungs- bzw. Bremsscheibe drehfest verbunden
ist, die gegen eine auf der Motorwelle sitzende Antriebsscheibe bzw. ein Bremswiderlager anpreßbar sind.

Bei einem bekannten Motor dieser Art (DE-AS 22 63 259) ist
die Nabe in zwei mit der Abtriebswelle unabhängig voneinander verbundene Nabenteile unterteilt, die von der Kupplungsscheibe bzw. der Bremsscheibe koaxial umfaßt sind.
Der radial innenliegende Rand der Federringe ist mit je
einem der beiden Nabenteile verbunden, während an dem radial außenliegenden Teil der Federringe die Kupplungs- bzw.
die Bremsscheibe angebracht sind. Zur gegenseitigen Verbindung von Abtriebswelle und Nabenteilen dienen in die Nabenteile radial eingeschraubte Stellschrauben, die sich gegen die Außenfläche der Abtriebswelle anpressen. Zum Einstellen von Brems- und Kupplungsspiel muß die Abtriebswelle ausgebaut werden, um an die Stellschrauben der Nabenteile heranzukommen und nach Lösen dieser Schrauben die Nabenteile gegenüber der Abtriebswelle axial verschieben zu können. Die Auswirkung einer solchen Verstellung kann erst überprüft werden, nachdem die Abtriebswelle zusammen mit Kupplungs- und Bremsscheibe wieder eingebaut ist. Infolgedessen müssen Ausbau, Einstellung und Einbau u.U. mehrfach wiederholt werden, bis Kupplungs- und Bremsspiel den gewünschten Wert haben. Bei der bekannten Lösung sind ferner die Federringe im stromlosen Zustand von Kupplung und Bremse spannungsfrei. Es fehlt daher an einer definierten Ausgangsstellung von Brems- und Kupplungsscheibe, was die Einstellung des richtigen Brems- und Kupplungsspiels weiter erschwert.

Der Erfindung liegt die Aufgabe zugrunde, ausgehend von dem genannten Stand der Technik einen Kupplungsmotor zu schaffen, der eine bequeme und genaue Einstellung von Bremsspiel und/oder Kupplungsspiel gestattet.

Diese Aufgabe wird erfindungsgemäß dadurch gelöst, daß die Nabe einteilig ausgebildet ist und einen axial zwischen der Kupplungsscheibe und der Bremsscheibe liegenden Tragring aufweist, daß die Federringe an von der Nabenachse im wesentlichen in gleichem Radialabstand liegenden, in Drehrichtung aber gegeneinander versetzten Stellen mit dem Tragring und mit der Kupplungsscheibe bzw. der Bremsscheibe verbunden sowie mit einer Ruhevorspannung versehen sind,

und daß zum Einstellen des Bremsspiels und/oder des Kupplungsspiels die Abtriebswelle in axialer Richtung verstellbar ist.

Bei der erfindungsgemäßen Lösung sorgen die vorgespannten Federringe im Zusammenwirken mit dem Tragring der Nabe dafür, daß die Bremsscheibe und die Kupplungsscheibe eine definierte Ausgangsstellung einnehmen, solange der zugehörige Magnet (Bremsmagnet bzw. Kupplungsmagnet) nicht erregt ist. Angesichts dieser vorbestimmten Ausgangslage können dann durch axiales Verstellen der Abtriebswelle das Bremsspiel und/oder das Kupplungsspiel bequem und genau eingestellt werden.

Die Merkmale der Ansprüche 2 und 3 führen zu einer besonders guten Raumausnutzung sowohl in axialer als auch in radialer Richtung. Mit der Maßnahme des Ansprchs 5 läßt sich eine wirksame Kühlung der Kupplungs/Brems-Anordnung erreichen. Die Merkmale der Ansprüche 6 und 7 erlauben eine einfache Justierung der Axiallage der Abtriebswelle und damit der Nabe von außen. Mit den Merkmalen der Ansprüche 8, 9 und 10 kann auf einfache und bequeme Weise eine von der Verstellung der Abtriebswelle unabhängige Axialverstellung der Motorwelle und der mit ihr verbundenen Antriebsscheibe erfolgen.

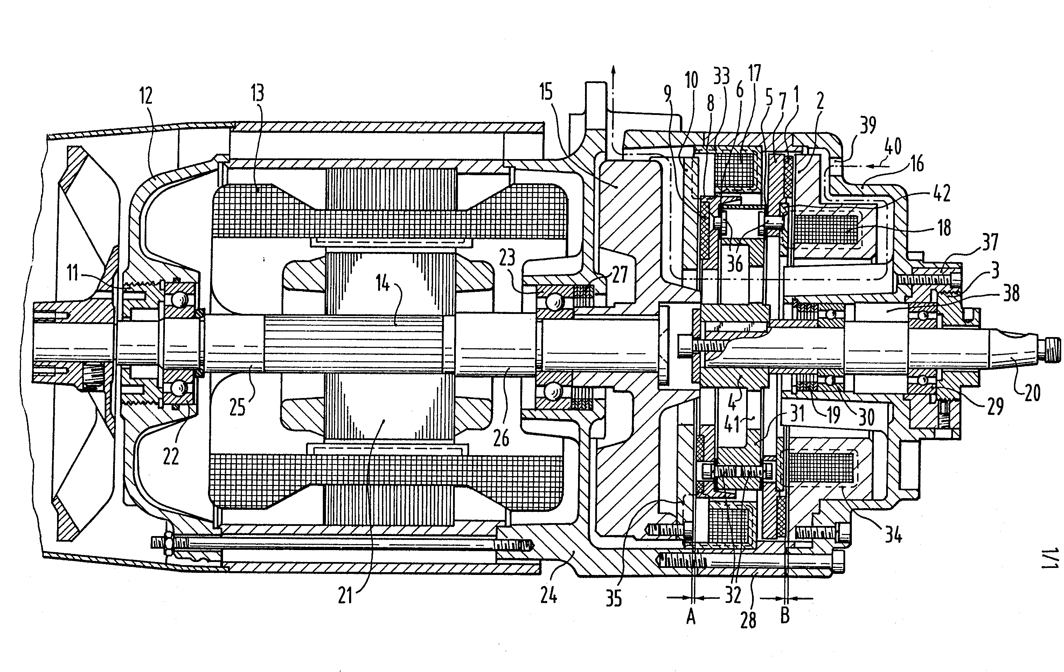

Die Erfindung ist im folgenden anhand eines Ausführungsbeispiels näher erläutert. Die einzige Figur zeigt einen Längsschnitt durch einen erfindungsgemäß aufgebauten Kupplungsmotor.

Der veranschaulichte Kupplungsmotor weist einen Antriebsmotor 13 auf, dessen Rotor 21 auf einer Motorwelle 14
sitzt. Die Motorwelle trägt an ihrem in der Figur rechten Ende eine Schwungscheibe 15, mit der eine Antriebsscheibe 10 verbunden, z.B. verschraubt ist. Die der Antriebsscheibe 10 zugewendete Stirnfläche der Schwungscheibe 15 ist als Radiallüfter ausgebildet. Die Motorwelle 14 ist in Lagern 22, 23 gelagert, die in Lagerschilden 12 bzw. 24 sitzen und deren Innenring sich
gegen einen Bund 25 bzs. 26 der Motorwelle 14 abstützt.
In das Lagerschild 12 ist ein zur Motorwelle 14 konzentrischer Schraubring 11 eingeschraubt, der sich gegen das Lager 22 seitlich anlegt. Durch Drehen des
Schraubrings 11 in der einen Richtung läßt sich die
Motorwelle 14 zusammen mit der Schwungscheibe 15 und der
Antriebsscheibe 10 in der Figur nach rechts axial verschieben. Diese Verstellbewegung erfolgt entgegen der
Kraft eines Federpakets 27, das konzentrisch zur Motorwelle 14 im Lagerschild 24 gehalten ist und das sich
gegen die in der Figur rechte Seite des Lagers 23 anlegt. Wird der Schraubring 11 in der anderen Drehrichtung verstellt, schiebt das Federpaket 27 die Motorwelle 14 über das Lager 23 und den Bund 26 in der Figur
nach links.

Mit dem Lagerschild124 sind ein Gehäusering 28 und ein
Lagerschild 16 verschraubt. In dem Lagerschild 16 ist
über Lager 29, 30 eine Abtriebswelle 20 gelagert, die
gleichachsig zu der Motorwelle 14 ausgerichtet ist.
Mit der Abtriebswelle 20 ist eine Nabe 4 verkeilt, die
einen zur Achse der Abtriebswelle 20 konzentrisch liegenden Tragring 31 aufweist. Zu beiden Seiten des Tragrings 31 liegen ein Federring 5 bzw. ein Federring 6, die mit dem Tragring 31 über Schrauben 32 verbunden sind. Die Schrauben 32 reichen von entgegengesetzten Stirnseiten des Tragrings 31 aus in eine gemeinsame Gewindebohrung des Tragrings. Wie aus der oberen Hälfte der Figur folgt, sind die Federringe 5, 6 ferner mit einer Bremsscheibe 7 bzw. einer Kupplungsscheibe 8 fest verbunden, z.B. mit Hilfe von Nieten 36 vernietet. Ein Ankerring 42 ist, zweckmäßig ebenfalls mittels der Nieten 36, an der in der Figur rechten Stirnseite der vorzugsweise aus Leichtmetall, z.B. Aluminium, bestehenden Bremsscheibe 7 fest angebracht. Bremsscheibe 7 und Kupplungsscheibe 8 sitzen auf gegenüberliegenden Seiten der Nabe 4, sind ringförmig ausgebildet und tragen an ihrer von der Nabe 4 bzw. dessen Tragring 31 abgewendeten Seite einen Bremsreibbelag 1 bzw. einen Kupplungsreibbelag 9. Der Kupplungsreibbelag 9 wirkt mit der Antriebsscheibe 10 zusammen, während der Bremsreibbelag gegen einen zugleich als Bremswiderlager dienenden Bremsmagnetkörper 2 anpreßbar ist, der mit dem Lagerschild 16 verbunden, beispielsweise verschraubt ist. In dem Bremsmagnetkörper 2 ist auf der von dem Tragring 31 abliegenden Seite der Bremsscheibe 7 eine Bremsspule 18 untergebracht. Eine Kupplungsspule 17 ist in einem Kupplungsmagnetkörper 33 angeordnet, der in dem Gehäusering 28 eingesetzt ist, der mit seinem radial außenliegenden Schenkel die Antriebsscheibe 10 koaxial umgreift. Der der Bremsspule 18 axial gegenüberstehende Ankerring 42, die Kupplungsscheibe 8, die Antriebsscheibe 10 sowie die Magnetkörper 30, 32 bestehen aus weichmagnetischem Werkstoff. Die Federringe 5, 6 stehen unter einer Ruhevorspannung, um bei stromloser Bremse und Kupplung die Scheiben 7, 8 gegen den Tragring 31 zu ziehen. Bei Erregung der Bremsspule 18 wird ein bei 34 angedeuteter Bremsmagnetfluß ausgebildet, der entgegen
der Rückstellkraft des Federringes 5 die Bremsscheibe 7
axial in Richtung auf den Bremsmagnetkörper 2 bewegt.
Wird dagegen die Kupplungsspule 17 an Strom gelegt, entsteht ein Kupplungsmagnetfluß 35, der die Kupplungsscheibe 8 entgegen der Rückstellkraft des Federringes 6 in
axialer Richtung der Gegenscheibe 10 verstellt.

Der Tragring 31 und die Kupplungsscheibe 8 haben im wesentlichen gleichen Durchmesser, während der Außendurchmesser der Antriebsscheibe 10 im wesentlichen gleich dem
Außendurchmesser der Bremsscheibe 7 und größer als der
Außendurchmesser von Tragring und Kupplungsscheibe ist.
Der von der Kupplungsspule 17 und dem Kupplungsmagnetkörper 33 gebildete Kupplungsmagnet ist im wesentlichen
in einem Ringraum untergebracht, der seitlich von der
Antriebsscheibe und der Bremsscheibe sowie radial innen
von der Kupplungsscheibe und dem Tragring begrenzt ist.
Die Schrauben 32 und die Niete 36 liegen im wesentlichen
in gleichem Radialabstand von der Achse der Nabe 4. Sie
sind jedoch in Drehrichtung gegeneinander versetzt. Während in der Figur nur ein Paar Schrauben 32 und ein Paar
Niete 36 dargestellt sind, versteht es sich, daß mehrere
solche Paare vorhanden sein können. Beispielsweise können die Federringe 5, 6 an drei im Umfangsrichtung um jeweils 120° gegeneinander versetzten Stellen mit dem Tragring 31 der Nabe 4 verbunden sein, während drei gleichfalls in gegenseitigem Winkelabstand von 120° liegende
Befestigungsstellen zwischen den Federringen 5,6 und der
Bremsscheibe 7 bzw. der Kupplungsscheibe 8 vorgesehen
sein können, die gegenüber den Befestigungsstellen zwischen
den Federringen und der Nabe um jeweils 60° winkelversetzt
sind.

In einen Aufnahmekörper 37 des Lagerschilds 16 ist ein Schraubring 3 eingeschraubt, der sich gegen die in der Figur rechte Seitenfläche des Lagers 30 anlegt. Durch Drehen des Schraubringes in der einen Richtung wird die Abtriebswelle 20 entgegen der Kraft eines Federpakets 19 über das Lager 30 und einen Bund 38 der Abtriebswelle 20 in der Figur nach links verschoben. Wird der Schraubring 3 dagegen in anderer Richtung gedreht, erfolgt mittels des Federpakets 19 über das Lager 29 und den Bund 38 eine Axialverschiebung der Abtriebswelle 20 in der Figur nach rechts.

Das Lagerschild 16 ist mit Lüftungsöffnungen 39 versehen. Über diese Öffnungen eintretende Kühlluft 40 streicht an der in der Figur rechten Stirnseite des Bremsmagnetkörpers 2 entlang, durchläuft dann in im wesentlichen axialer Richtung die Innenöffnungen des Bremsmagnetkörpers 2 und der Bremsscheibe 7, Kühlluftdurchbrüche 41 der Nabe 4 sowie die Innenausnehmungen von Kupplungsscheibe 8 und Antriebsscheibe 10, um anschließend von dem Radiallüfter zwischen Antriebsscheibe 10 und Schwungscheibe 15 radial nach außen getrieben zu werden.

Im Betrieb laufen die Motorwelle 14, die Schwungscheibe 15 und die Antriebsscheibe 10 ständig um. Solange die Kupplungsspule 17 und die 'Bremsspule 18 stromlos sind, werden die Kupplungsscheibe 8 und die Bremsscheibe 7 unter dem Einfluß der Vorspannung der Federringe 6, 5 in einer definierten Ausgangsstellung gehalten, in der zwischen der Stirnseite der Antriebsscheibe 10 und
dem Kupplungsreibbelag 9 ein Axialluftspalt A sowie
zwischen der Stirnseite des Bremsmagnetkörpers 2 und
dem Bremsreibbelag 1 ein Axialluftspalt B vorhanden
sind. Die Abtriebswelle 20 befindet sich in Ruhe.

Wird die Kupplungsspule 17 erregt, schließt sich das
Kupplungsmagnetfeld. Die Kupplungsscheibe 8 trifft
mit dem Kupplungsreibbelag 9 auf die rotierende Antriebsscheibe 10. Deren Drehbewegung wird über den
Federring 6 auf die Nabe 4 und die Abtriebswelle 20
übertragen.

Beim Abschalten des Stroms in der Kupplungsspule 17
wird die Kupplungsscheibe 8 von dem Federring in ihre
Ausgangslage zurückgebracht. Durch Erregen der Bremsspule 18 wird das Bremsmagnetfeld geschlossen. Die
Bremsscheibe 7 wird mit dem Bremsreibbelag 1 gegen den
stehenden Bremsmagnetkörper 2 angepreßt. Das Bremsdrehmoment wird über den Federring 5 auf die Nabe 4
geleitet. Die Welle 20 wird abgebremst.

Zur Einstellung des Bremsspiels B wird der von außen
zugängliche Schraubring 3 gedreht. Dadurch erfolgt
in der zuvor erläuterten Weise eine Axialverschiebung
der Abtriebswelle 20 samt Nabe 4·und Bremsscheibe 7.
Der Bremsbelag 1 liegt an dem Bremsmagnetkörper 2
dann an, wenn sich die Welle 20 nicht mehr von Hand
drehen läßt. Eine genaue Justierung des Bremsspiels
B kann ausgehend von dieser Einstellung dadurch erfolgen, daß der Schraubring 3 um einen vorbestimmten

*Winkel in entgegengesetzter Richtung gedreht wird.*

*Das Kupplungsspiel A wird mittels des Schraubrings 11 eingestellt. Durch Drehen dieses Ringes werden die Motorwelle 14, die Schwungscheibe 15 und die Antriebsscheibe 10 in axialer Richtung verschoben. Das Kupplungsspiel ist Null, wenn bei einem Drehen der Welle 20 der Rotor 21 des Antriebsmotors 13 mitgenommen wird. Ausgehend davon wird das Kupplungsspiel A dadurch exakt vorgegeben, daß der Schraubring 11 um einen vorgegebenen Winkel in entgegengesetzter Drehrichtung verstellt wird.*

*Bei der erläuterten Anordnung werden Kupplungs- und Bremsscheibe im nichterregten Zustand von Kupplungs- und Bremsmagnet durch die Vorspannung des betreffenden Federringes in die vorbestimmte Ausgangsstellung immer zuverlässig zurückgebracht. Damit ist ein Mitschleifen des Kupplungs- bzw. Bremsbelages ausgeschlossen.*

*Das Arbeitsspiel von Kupplung und Bremse läßt sich ohne Verwendung von Meßmitteln, wie Abstandsspion oder dergleichen, genau einstellen. Fertigungstoleranzen und Abnutzungen der Reibbeläge sind damit auf einfache Weise auszugleichen.*

*Der erläuterte Kupplungsmotor mit Kupplungs/Bremssystem eignet sich insbesondere für Positionierantriebe im Maschinenbau sowie an Textil- und Nähmaschinenantrieben.*

1C

Quick-Rotan

Elektromotoren GmbH

Gräfenhäuser Str. 85

6100 Darmstadt


A n s p r ü c h e


1. Kupplungsmotor mit elektromagnetisch betätigter Reibungskupplung und -bremse zum Übertragen von Antriebs- und/oder Bremsdrehmoment auf eine Abtriebswelle, auf der eine Nabe dreh- und verschiebefest angebracht ist, die über je einen axial auslenkbaren Federring mit einer durch Magnetkraft axial verstellbaren, ringförmigen Kupplungs- bzw. Bremsscheibe drehfest verbunden ist, die gegen eine auf der Motorwelle sitzende Antriebsscheibe bzw. ein Bremswiderlager anpressbar sind, dadurch gekennzeichnet, daß die Nabe (4) einteilig ausgebildet ist und einen axial zwischen der Kupplungsscheibe (8) und der Bremsscheibe (7) liegenden Tragring (31) aufweist, daß die Federringe (5, 6) an von der Nabenachse im wesentlichen in gleichem Radialabstand liegenden, in Drehrichtung aber gegeneinander versetzten Stellen mit dem Tragring und mit der Kupplungsscheibe bzw. der Bremsscheibe verbunden sowie mit einer Ruhevorspannung versehen sind, und daß zum Einstellen des Bremsspiels und/oder des Kupplungsspiels die Abtriebswelle (20) in axialer Richtung verstellbar ist.

2. Kupplungsmotor nach Anspruch 1, dadurch gekennzeichnet,
daß der Tragring (31) und die Kupplungsscheibe (8) nahezu gleichen Außendurchmesser aufweisen.

3. Kupplungsmotor nach Anspruch 2, dadurch gekennzeichnet,
daß der Außendurchmesser von Antriebsscheibe (10) und
Bremsscheibe (7) größer als der Außendurchmesser von
Tragring (31) und Kupplungsscheibe (8) ist, und daß
in dem seitlich von der Antriebsscheibe und der Bremsscheibe sowie radial innen von der Kupplungsscheibe
und dem Tragring begrenzten Ringraum der Kupplungsmagnet (17, 33) untergebracht ist.

4. Kupplungsmotor nach einem der vorhergehenden Ansprüche,
dadurch gekennzeichnet, daß der Bremsmagnet (2, 18) an
der von dem Tragring (31) abliegenden Seite der Bremsscheibe (7) angeordnet ist.

5. Kupplungsmotor nach einem der vorhergehenden Ansprüche,
dadurch gekennzeichnet, daß die Bremsscheibe (7), die
Nabe (4), die Kupplungsscheibe (8) und die Antriebsscheibe (10) mit Durchbrüchen für den Durchtritt von
Kühlluft versehen sind.

6. Kupplungsmotor nach einem der vorhergehenden Ansprüche,
dadurch gekennzeichnet, daß ein leicht zugänglicher, in
einen gehäusefesten Teil (16, 37) des Kupplungsmotors
eingeschraubter Schraubring (3) vorgesehen ist, der sich zum Verstellen der Abtriebswelle (20) in der einen
Axialrichtung gegen einen Bund der Abtriebswelle
oder ein gemeinsam mit der Abtriebswelle axial verstellbares Lager (30) der Abtriebswelle anlegt.

7. Kupplungsmotor nach Anspruch 6, dadurch gekennzeichnet, daß die Abtriebswelle (20) in der anderen Axialrichtung federnd vorgespannt ist.

8. Kupplungsmotor nach einem der vorhergehenden Ansprüche, dadurch gekennzeichnet, daß die Antriebsscheibe
(10) zusammen mit der Motorwelle (14) in axialer
Richtung verstellbar ist.

9. Kupplungsmotor nach Anspruch 8, dadurch gekennzeichnet, daß ein leicht zugänglicher, in einen gehäusefesten Teil (12) des Kupplungsmotors eingeschraubter
Schraubring (11) vorgesehen ist, der sich zum Verstellen der Motorwelle (14) in der einen Axialrichtung gegen einen Bund der Motorwelle oder ein gemeinsam mit der Motorwelle axial verstellbares Lager (22) der Motorwelle anlegt.

10. Kupplungsmotor nach Anspruch 9, dadurch gekennzeichnet, daß die Motorwelle (14) in der anderen Axialrichtung federnd vorgespannt ist.

Europäisches
Patentamt

**EUROPÄISCHER RECHERCHENBERICHT**

0130344
Nummer der Anmeldung

EP 84 10 5819

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| X | DE-B-2 649 252 (GEORGII-KOBOLD) * Spalte 3, Zeile 36 - Spalte 5, Zeile 12; Figur 1 * | 1-10 | H 02 K 7/112 |
| | --- | | |
| X | EP-A-0 045 591 (MATSUSHITA ELECTRIC INDUSTRIAL) * Seite 6, Zeile 18 - Seite 7, Zeile 14; Figuren 2, 6, 7 * | 1 | |
| | --- | | |
| A | DE-B-1 763 696 (ROTHENBORG PATENT & LICENS) * Spalte 8, Zeilen 14-29 * | 1,5 | |
| | --- | | |
| A | DE-A-2 934 396 (TORNADO) * Seite 8, Absatz 3 * | 1,6 | |
| | --- | | RECHERCHIERTE SACHGEBIETE (Int. Cl. ³) |
| D,A | DE-B-2 263 259 (FRANKL & KIRCHNER) * Spalte 3, Zeile 58 - Spalte 4, Zeile 29 * | | H 02 K 7/00 |
| | ----- | | |

Der vorliegende Recherchenbericht wurde für alle Patentansprüche erstellt.

| Recherchenort BERLIN | Abschlußdatum der Recherche 29-08-1984 | Prüfer GESSNER E A F |
|---|---|---|